# EUROPÄISCHE PATENTSCHRIFT

(11) **EP 3 588 727 B1**
(45) Veröffentlichungstag und Bekanntmachung des Hinweises auf die Patenterteilung: **16.02.2022**
(21) Anmeldenummer: 18180421.2
(22) Anmeldetag: 28.06.2018
(51) Int. Cl.: H02J 3/32, H02J 7/35, H02J 3/38, H02J 13/00, H02J 7/34, H02J 4/00

(54) **VORRICHTUNG ZUR ANBINDUNG VON ABNEHMERN AN ENERGIEVERSORGUNGSNETZE**
DEVICE FOR CONNECTING CONSUMERS TO ENERGY SUPPLY NETWORKS
DISPOSITIF DE RACCORDEMENT DE CONSOMMATEURS À DES RÉSEAUX D'ALIMENTATION EN ÉNERGIE

(43) Veröffentlichungstag der Anmeldung: 01.01.2020
(73) Patentinhaber: E.ON SE, 45131 Essen (DE)
(72) Erfinder: Monti, Antonelli, 52072 Aachen (DE); Müller, Dirk, 52074 Aachen (DE)
(74) Vertreter: Patentanwälte Bals & Vogel

(56) Entgegenhaltungen:
- US-A1- 2003 160 595
- US-A1- 2013 024 034
- US-A1- 2013 342 018
- HUI GUO ET AL: "Review of energy routers applied for the energy internet integrating renewable energy", 2016 IEEE 8TH INTERNATIONAL POWER ELECTRONICS AND MOTION CONTROL CONFERENCE (IPEMC-ECCE ASIA), IEEE, 22. Mai 2016 (2016-05-22), Seiten 1997-2003, XP032924589, DOI: 10.1109/IPEMC.2016.7512602 [gefunden am 2016-07-13]
- FU HAO ET AL: "A Configurable $\mu $ VPP With Managed Energy Services: A Malmo Western Harbour Case", IEEE POWER AND ENERGY TECHNOLOGY SYSTEMS JOURNAL, IEEE, Bd. 3, Nr. 4, 1. Dezember 2016 (2016-12-01), Seiten 166-178, XP011636490, DOI: 10.1109/JPETS.2016.2596779 [gefunden am 2016-12-09]
- ZHOU XUESONG ET AL: "An overview on energy internet", 2015 IEEE INTERNATIONAL CONFERENCE ON MECHATRONICS AND AUTOMATION (ICMA), IEEE, 2. August 2015 (2015-08-02), Seiten 126-131, XP033216377, DOI: 10.1109/ICMA.2015.7237469 ISBN: 978-1-4799-7097-1 [gefunden am 2015-09-02]

## Beschreibung

Die Erfindung betrifft eine Vorrichtung zur Anbindung von Abnehmern an Energieversorgungsnetze, in denen elektrische Energie paketbasiert übertragen wird.

In herkömmlichen Energieversorgungsnetzen mit einer Vielzahl von Verbrauchern und einer vergleichsweise geringen Anzahl von Erzeugern wird die Leistungsbilanz des Netzes ständig überwacht, sodass bei jeglicher Veränderung des Leistungsbedarfs, bspw. weil ein Verbraucher zu- oder abgeschaltet, die von den Erzeugern in das Netz eingespeiste Leistung entsprechend angepasst wird, damit im Netz eine ausgeglichene Leistungsbilanz vorliegt. Ein Ergebnis dieses Leistungsbilanzausgleichs ist bspw. die im Wesentlichen konstante Spannung im Energieversorgungsnetz.

Aufgrund des Aufkommens regenerativer Erzeuger, wie bspw. Windenergieanlagen, Solarkraftwerke und Fotovoltaikanlagen, und dezentraler Energieerzeugung, bspw. über kleine Kraft-Wärme-Kopplungs-Anlagen in Wohnhäusern, wird ein entsprechender Leistungsbilanzausgleich im Energieversorgungsnetz immer aufwendiger. Dies gilt umso mehr, wenn neben dem Leistungsbilanzausgleich noch weitere Faktoren, wie Pflichten zur Abnahme elektrischer Leistung einzelner Erzeuger, berücksichtigt werden müssen.

Im Stand der Technik, bspw. der DE 10 2009 003 173 A1, wird daher eine paketbasierte Übertragung elektrischer Energie vorgeschlagen, bei denen Energiepakete durch Datenpakete ergänzt werden, in denen neben der Größe des jeweiligen Energiepakets (in der Regel angegebene in kWh) wenigstens die Adressierung des Empfängers, für den das Energiepaket vorgesehen ist, enthalten ist. Das Energieversorgungsnetz ist dabei mit Netzknoten ausgestattet, die dazu ausgebildet sind, die Datenpakete auszulesen und die Energiepakete an einen benachbarten Netzknoten, der gemäß der Adressierung aus dem Datenpaket dem letztendlichen Empfänger näher liegt, weiterzuleiten, bis das Energiepaket an den durch die Adressierung angegeben Empfänger unmittelbar weitergeleitet werden kann. Eine paketbasierte Energieübertragung ist auch im Dokument "HUI GUI ET AL: "Review of energy routers applied for the energy internet integrating renewable energy", 2016 IEEE 8TH INTERNATIONAL POWER ELECTRON-ICS AND MOTION CONTROL CONFERENCE (IPEMC-ECCE ASIA), IEEE, 22. Mai 2016 (2016-05-22), Seiten 1997-2003" beschrieben. Die zweiteilige Form des Anspruchs 1 basiert auf diesem Stand der Technik.

Bei zumindest einem Teil der Empfänger von Energiepaketen kann gemäß DE 10 2009 003 173 A1 jeweils ein Energiespeicher vorgesehen sein, um Energie zwischenspeichern zu können, falls nicht sämtliche Energie eines eingehenden Energiepakets unmittelbar verbraucht werden kann. Auch kann in dem Energiespeicher eine gewisse Energiereserve vorgehalten werden, um den Verbrauchern des Empfängers selbst dann Energie zur Verfügung zu stellen, wenn ein grundsätzlich dafür angefordertes Energiepaket nicht unmittelbar zur Verfügung stehen sollte.

Der Erfindung liegt die Aufgabe zugrunde, den Stand der Technik insbesondere im Hinblick auf die Anbindung von Abnehmern an paketbasierte Energieversorgungsnetze zu verbessern. Gelöst wird diese Aufgabe durch eine Vorrichtung gemäß dem Hauptanspruch sowie ein Verfahren zum Betrieb der Vorrichtung gemäß Anspruch 11. Vorteilhafte Weiterbildungen sind Gegenstand der abhängigen Ansprüche.

Demnach betrifft die Erfindung eine Vorrichtung zur Anbindung eines Abnehmers an ein paketbasiertes Energieversorgungsnetz umfassend einen netzseitigen Anschluss, einen abnehmerseitigen Anschluss und einen Energiespeicher, wobei der Energiespeicher derart zwischen dem netzseitigen Anschluss und dem abnehmerseitigen Anschluss geschaltet ist, dass die Leistungsflüsse über die beiden Anschlüsse voneinander entkoppelt sind, der Leistungszufluss vom Netz zum Energiespeicher und Leistungsabfluss vom Energiespeicher zum Abnehmer durch eine Steuerungseinrichtung steuerbar ist und die Steuerungseinrichtung mit einer netzseitigen Netzwerkschnittstelle zur Anbindung des Energienetzbetreibers und einer abnehmerseitigen Netzwerkschnittstelle vorgesehen ist, wobei der Leistungsabfluss vom Energiespeicher zum Abnehmer ausschließlich über die abnehmerseitige Netzwerkschnittstelle überwacht und gesteuert werden kann.

Die Erfindung betrifft weiterhin ein Verfahren zum Betrieb einer Vorrichtung gemäß einem der vorhergehenden Ansprüche, wobei der Leistungsfluss über den netzseitigen Anschluss über die netzseitige Netzwerkschnittstelle überwacht und beeinflusst wird, der Leistungsfluss über den abnehmerseitigen Anschluss aber ausschließlich über die abnehmerseitige Netzwerkschnittstelle überwacht und gesteuert wird.

Zunächst werden einige in Zusammenhang mit der Erfindung verwendete Begriffe erläutert.

Bei einem "paketbasierten Energieversorgungsnetz" handelt es sich um ein Versorgungsnetz, bei dem wenigstens ein Teil der übertragenen Energie in Paketen mit definierter Energiemenge von einem Absender zu einem eindeutig identifizierbaren Empfänger übertragen wird. Die Adressierung des Empfängers und ggf. auch die Größe des Energiepakets (bspw. wenn keine netzweite Einheitsgröße gegeben ist) können in dem Energiepaket selbst oder einem dem Energiepaket eindeutig zugeordneten Datenpaket hinterlegt sein. Die Übertragung des Energiepakets erfolgt dann analog zur Datenübertragung in paketbasierten Datenübertragungsnetzwerken von Netzknoten zu Netzknoten, wobei der Pfad des Energiepakets anhand der Empfängeradresse entweder ad hoc durch die einzelnen Netzknoten oder im Vorwege durch den Absender des Energiepakets ermittelt wird ("Routing"). Zur weiteren Erläuterung eines paketbasierten Energieversorgungsnetzes wird auf die DE 10 2009 003 173 A1 verwiesen.

Als "Abnehmer" ist ein an das Energieversorgungsnetz angeschlossener und zum Empfang von Energiepaketen ausgebildeter Teilnehmer bezeichnet, die eindeutig zum Empfang von Energiepaketen adressierbar sind und bei dem maßgeblich die über das Energieversorgungsnetz eingehende Energie verbraucht wird. Typische Abnehmer sind somit an das Energieversorgungsnetz angeschlossene Industrie- und Gewerbebetriebe sowie Haushalte. Dabei ist nicht ausgeschlossen, dass ein Abnehmer auch Energieerzeugungseinrichtungen, wie bspw. Solarpaneele, aufweist, sodass er wenigstens zeitweise auch nicht unmittelbar selbst verbrauchte Energie in Form von Energiepaketen an das Energieversorgungsnetz abgibt. In Abgrenzung zu solchen Abnehmern handelt es sich bei "Erzeugern" um mit dem Energieversorgungsnetz verbundene, primär energieeinspeisende Einheiten, wie Kraftwerke, Windparks, etc., während "Netzknoten" primär zur Durchleitung von Energiepaketen ausgebildet sind.

Mit ^{"}Netzwerkschnittstelle" ist eine logische und/oder physikalische Schnittstelle, die der Steuerungseinrichtung den Zugang zu einem zur Datenübertragung geeigneten Netz bezeichnet. Bei dem Datennetz kann es sich bspw. um ein von den Leitungen der Energieübertragung gesondertes Netz, bspw. ein TCP/IP-Netz, insbesondere ein Intranet oder das Internet, handeln, über das bspw. Energiepaketen eindeutig zugeordnete Datenpakete oder Anforderungen von Energiepaketen gesendet werden können. Es ist aber auch möglich, dass die Daten parallel über die Leitungen zur Energieübertragung übertragen werden. Sind, wie erfindungsgemäß, zwei Netzwerkschnittstellen vorzusehen, können diese durch zwei separate physikalische Schnittstelleneinheiten - bspw. zwei Netzwerkadapter - gebildet sein. Es ist aber auch möglich, wenn die beiden Netzwerkschnittstellen durch eine einzige Einheit gebildet werden. Zur logischen Trennung in zwei Netzwerkschnittstellen kann die physikalische Einheit zwei Adressierungen (in TCP/IP-Netzen bspw. zwei unterschiedliche IP-Adressen oder zwei unterschiedliche Ports unter derselben IP-Adresse) aufweisen. Es ist auch möglich, dass die logische Trennung in zwei Netzwerkschnittstellen rein softwarebasiert durch unterschiedliche Anmeldeinformationen bspw. des Netzbetreibers und des Abnehmers erreicht wird.

Zwei Leistungsflüsse gelten als "entkoppelt", wenn eine Veränderung eines der beiden Leistungsflüsse grundsätzliche keine Auswirkungen auf den anderen Leistungsfluss hat.

Die Erfindung hat erkannt, dass es bei einem paketbasierten Energieversorgungsnetz - für welche die erfindungsgemäße Vorrichtung vorgesehen und entsprechend geeignet ausgestaltet ist - vorteilhaft ist, den tatsächlichen Energieverbrauch (sowie ggf. die Energieerzeugung) seitens eines Abnehmers logisch derart vom Betrieb des Energieversorgungsnetzes zu trennen, dass bspw. der Betreiber des Energieversorgungsnetzes weder Daten noch die Möglichkeit der von Rückschlüssen auf die tatsächliche Energienutzung des Abnehmers erhält. Anders als bei bekannten Anbindungen von Abnehmern an paketbasierte Energieversorgungsnetz müssen Anforderungen von Energiepaketen durch elektrische Verbraucher, die ggf. Informationen über die Art des Verbrauchers enthalten, nämlich nicht mehr bis zu dem Betreiber eines Versorgungsnetzes übermittelt werden, sondern können durch die Steuerungseinrichtung der erfindungsgemäßen Vorrichtung mithilfe der Energie aus dem Energiespeicher bedient werden. An das Energieversorgungsnetz werden dann, bei Bedarf, lediglich Anforderungen von Energiepaketen zum Auffüllen des Energiespeichers gesendet.

Im Unterschied insbesondere zu klassischen Energieversorgungsnetzen besteht für dessen Betreiber bei der erfindungsgemäßen Vorrichtung auch keine Möglichkeit, aufgrund des momentanen Leistungsflusses auf die letztendliche Verwendung der vom Abnehmer verbrauchten Energie rückzuschließen, bspw. indem typische Leistungsprofile von Wasch- oder Spülmaschinen, Wäschetrocknern, etc. erkannt werden. Da der Betreiber des Energieversorgungsnetzes bei Verwendung der erfindungsgemäßen Vorrichtung keine konkreten Informationen oder Anhaltspunkte zur letztendlichen Energienutzung durch einen Abnehmer erhält, sinkt auch das Risiko, dass unbefugte Dritte entsprechende Informationen abgreifen können.

Um diese logische Trennung zwischen tatsächlichem Energieverbrauch (sowie ggf. die Energieerzeugung) seitens eines Abnehmers und dem Betrieb des Energieversorgungsnetzes zu erreichen, ist bei der erfindungsgemäßen Vorrichtung zwischen einem netzseitigen Anschluss zur Anbindung an das Energieversorgungsnetz und einem abnehmerseitigen Anschluss ein Energiespeicher zwischengeschaltet und so über die netzseitigen und abnehmerseitigen Netzwerkschnittstellen einer Steuerungseinrichtung steuerbar sind, dass der Leistungsabfluss vom Energiespeicher zum abnehmerseitigen Anschluss ausschließlich über die abnehmerseitige Netzwerkschnittstelle überwacht und gesteuert werden kann. In anderen Worten besteht über die netzwerkseitige Netzwerkschnittstelle keinerlei Zugriff auf den Leistungsabfluss vom Energiespeicher zum abnehmerseitigen Anschluss.

Aus Sicht des Netzbetreibers oder eines Dritten, der über die netzwerkseitige Netzwerkschnittstelle Zugriff auf die erfindungsgemäße Vorrichtung hat, stellt sich diese also lediglich als - wenigstens in Teilen - steuerbarer Energiespeicher dar, von dem ggf. bekannt sein mag, dass ein Abnehmer daraus Energie bezieht, jedoch ohne dass der Netzbetreiber oder entsprechende Dritte irgendwelche Rückschlüsse auf die tatsächliche Energienutzung durch den Abnehmer ziehen kann. Der Netzbetreiber kann höchstens den Gesamtenergieverbrauch des Abnehmers über einen gewissen Zeitraum abschätzen. Weitergehende Rückschlüsse sind bei der erfindungsgemäßen Vorrichtung nicht möglich. Über die netzseitige Datenschnittstelle kann lediglich der Leistungsfluss über die netzseitige Netzwerkschnittstelle überwacht und beeinflusst werden, bspw. indem Energiepakete an die Vorrichtung gesendet oder ggf. von dieser abgerufen werden. Für Letzteres kann vorgesehen sein, dass über die netzseitige Netzwerkschnittstelle der Ladezustand des Energiespeichers abgerufen werden kann, wobei die Information über den Ladezustand bevorzugt nur als diskrete Ladestufen, bspw. als Anzahl gespeicherter Energiepakete, und/oder in ausreichend langen Zeitabständen abgerufen werden kann, sodass weiterhin keine unmittelbaren Rückschlüsse auf die tatsächliche Energienutzung durch den Abnehmer möglich sind.

Unabhängig davon hat der Abnehmer oder ein von ihm ausdrücklich autorisierter Dritter, bspw. ein Dienstleister, über die abnehmerseitige Netzwerkschnittstelle die Möglichkeit, den Leistungsfluss von der Energiequelle vom abnehmerseitigen Anschluss zu überwachen und ggf. zu steuern. Auch können über die abnehmerseitige Netzwerkschnittstelle evtl. Einstellungen und Parameter der Steuerungseinrichtung, von denen nachfolgend einige exemplarisch erläutert werden, verändert werden.

Wie bereits dargelegt ist nicht ausgeschlossen, dass an dem abnehmerseitigen Anschluss auch Energieerzeugungseinheiten, wie bspw. Fotovoltaikmodule oder Kraft-Wärme-Kopplungssysteme, angeschlossen sind, die wenigstens zeitweise Energie erzeugen. Wird von diesen Energieerzeugungseinheiten mehr Energie erzeugt als momentan seitens des Abnehmers verbraucht wird, ist es wünschenswert, diese überschüssige Energie im Energiespeicher der Vorrichtung speichern zu können. Alternativ oder zusätzlich kann es auch wünschenswert sein, einzelne Energiepakete aus dem Energiespeicher der Vorrichtung abzurufen und in das Energieversorgungsnetz einzuspeisen, um so bspw. evtl. Versorgungsengpässe im Netz auszugleichen, das Netz bei Störungen zeitweise zu stützen oder die vom Abnehmer erzeugte Energie anderen Abnehmern zur Verfügung zu stellen. Um dies zu erreichen, ist es bevorzugt, wenn die Schaltung des Energiespeichers zum steuerbaren Leistungsabfluss vom Energiespeicher zum netzseitigen Anschluss und/oder zum steuerbaren Leitungszufluss vom abnehmerseitigen Anschluss zum Energiespeicher ausgebildet ist.

Bei dem Energiespeicher kann es sich um einen Akkumulator, bspw. auf Lithium-Ionen-Basis, oder um einen Speicherkondensator, insbesondere um einen Superkondensator, handeln. Um die Anzahl der Ladezyklen gering zu halten, kann vorgesehen sein, dass der Energiespeicher über eine Stromweiche zwischen die beiden Anschlüsse geschaltet ist, sodass ein steuerbarer Anteil des Leistungszuflusses vom netzseitigen Anschluss unmittelbar zum abnehmerseitigen Anschluss geleitet wird, wobei dieser Leistungsfluss ausschließlich über die abnehmerseitige Netzwerkstelle überwacht und gesteuert werden kann. In anderen Worten kann während des Empfangs eines Energiepakets aus dem Energieversorgungsnetz derjenige Teil der dabei übertragenen Energie, der momentan von dem Abnehmer verbraucht wird, unter Umgehung des Energiespeichers unmittelbar zum abnehmerseitigen Anschluss geleitet werden. Dadurch muss zumindest dieser Anteil der elektrischen Energie nicht in den Energiespeicher geladen und gleichzeitig von dem Energiespeicher entnommen werden. Dabei lässt sich die Stromweiche ausschließlich über die abnehmerseitige Netzwerkschnittstelle überwachen und steuern, sodass insbesondere der mit der netzwerkseitigen Netzwerkschnittstelle verbundene Dritte keine Informationen über die vorrichtungsinternen Leistungspfade erhält. Aus Sicht des Energieversorgungsnetzes ist nicht erkennbar, ob und zu welchem Anteil ein Energiepaket unmittelbar zum abnehmerseitigen Anschluss weitergeleitet wird. Für die Stromweiche, aber auch beliebige andere Schaltungskonfigurationen zur erfindungsgemäß vorgesehenen Leistungsflussregelung kann bspw. auf Abwärtswandler zurückgegriffen werden, bei denen der Leistungsfluss in eine vorgegebene Richtung über die Regelung der Stromstärke geregelt werden kann. Bei dieser Ausführungsform ist in jede der möglichen, zu regelnden Leistungsflussrichtungen - auch bei bidirektionalen Leistungsflüssen - jeweils ein Abwärtswandler vorzusehen.

Es ist bevorzugt, wenn in der Steuerungseinrichtung ein, vorzugsweise über die abnehmerseitige Netzwerkschnittstelle einstellbarer Minimalwert für die in dem Energiespeicher vorzuhaltende Energiemenge hinterlegt ist und die Steuerungseinrichtung dazu ausgebildet ist, über die netzseitige Netzwerkschnittstelle Anforderungen für Energiepakete zu versenden, um den Minimalwert einzuhalten. Dadurch kann sichergestellt werden, dass im Energiespeicher immer ausreichend Energie vorgehalten wird, um etwaige Anforderungen des Abnehmers auch dann augenblicklich erfüllen zu können, wenn unmittelbar kein ausreichendes Energiepaket über das Energieversorgungsnetz verfügbar sein sollte. Es ist auch möglich, einen vergleichbaren einstellbaren Maximalwert festzulegen, wobei die Steuerungseinrichtung dazu ausgebildet ist, über die netzseitige Netzwerkschnittstelle Anforderungen zur Abnahme von Energiepaketen zu versenden, um den Maximalwert einzuhalten.

Der durch die Steuerungseinrichtung gesteuerte Leistungsabfluss vom Energiespeicher zum abnehmerseitigen Anschluss, aber ggf. auch ein Leistungszufluss in die entgegengesetzte Richtung, kann über die abnehmerseitige Netzwerkschnittstelle beeinflusst werden. Beispielsweise können mit der erfindungsgemäßen Vorrichtung abnehmerseitig verbundene Verbraucher oder Erzeuger der Steuerungseinrichtung Anforderungen an benötigter Energie oder Informationen zur erzeugten Energie senden, die dann von der Steuerungseinrichtung bei der Steuerung des Leistungsflusses zwischen Energiespeicher und abnehmerseitigem Anschluss entsprechend berücksichtigt werden können. Um jedoch regelmäßig auch solche Verbraucher über die erfindungsgemäße Vorrichtung mit Energie versorgen zu können, die entsprechende Anforderungen und Informationen nicht liefern können, ist bevorzugt, wenn ein Spannungsmesser am abnehmerseitigen Anschluss vorgesehen ist und die Steuerungseinrichtung dazu ausgebildet ist, den Leistungsabfluss vom Energiespeicher zum abnehmerseitigen Anschluss zur Einhaltung einer Sollspannung am abnehmerseitigen Anschluss zu steuern. Indem die Steuerungseinrichtung die Spannung am abnehmerseitigen Anschluss auf eine Sollspannung regelt, ist gewährleistet, dass ausreichend elektrische Leistung zur Verfügung gestellt wird, ohne dass sämtliche Verbraucher ihre Leistungsanforderung an die Steuerungseinrichtung senden müssen.

Es ist bevorzugt, wenn am netzseitigen Anschluss ein Gleichrichter und/oder Wechselrichter zur Kopplung mit einem Wechselstromnetz vorgesehen ist, um Leistungszu- und -abflüsse zu einem als Gleichstrom-Energiespeicher ausgebildeten Energiespeicher zu ermöglichen. Dadurch ist es möglich, die Vorrichtung an derzeit üblichen Wechseldrehstromnetzen, wie bspw. 400V/50Hz in Europa, oder Wechselstromnetzen, wie bspw. 120V oder 240V/60Hz in Nordamerika, zu betreiben; der Aufbau eines gesonderten Netzes, insbesondere ein Gleichstromnetz, ist nicht erforderlich. Es ist dabei sogar grundsätzlich möglich, die erfindungsgemäße Vorrichtung an einem Energieversorgungsnetz zu betreiben, welches nur in Teilen auf paketbasierte Energieübertragung umgestellt wurde, im Übrigen aber auf die bekannte Leistungsbilanzregelung zurückgreift. In diesem Fall - aber ggf. auch in anderen Konfigurationen - wird nach Empfang eines ein Energiepaket definierenden Datenpakets über die netzseitige Netzwerkschnittstelle empfangen und daraufhin der Leistungsfluss über den netzseitigen Anschluss derart gesteuert, dass nur Leistung entsprechend des im Datenpaket definierten Energiepakets übertragen wird.

Aus dem Energieversorgungsnetz stammender Wechselstrom wird in für den Energiespeicher erforderlichen Gleichstrom gleichgerichtet; sofern Leistung aus dem Energiespeicher in das Energieversorgungsnetz eingespeichert werden soll, kann die Leistung über den Wechselrichter an die im Netz vorherrschenden Bedingungen hinsichtlich Spannung, Frequenz und Phasenverschiebung angepasst werden.

Am abnehmerseitigen Anschluss kann ein Verteiler mit wenigstens einer Geräteanschlussbuchse sein, wobei wenigstens ein Teil der Geräteanschlussbuchsen über einen oder mehrere Wechselrichter angebunden ist. Da der Energiespeicher Gleichstrom liefert, liegt auch am abnehmerseitigen Anschluss in der Regel Gleichstrom vor. Um dennoch herkömmliche elektrische Verbraucher mit Energie versorgen zu können, könne Wechselrichter in dem Verteiler vorgesehen sein, sodass bereits vorhandene Geräte ohne Weiteres weiterverwendet werden können.

Am abnehmerseitigen Anschluss kann alternativ oder zusätzlich wenigstens eine Geräteanschlussbuchse vorgesehen sein. An einer solchen Buchse können Gleichstromgeräte, vorzugsweise eine Wärmepumpe, ein Kraft-Wärme-Kopplungssystem, ein Fotovoltaik-System, ein thermischer Speicher oder ein zusätzlicher elektrischer Speicher, angebunden werden. Die Anbindung kann dabei auch "unmittelbar" sein, wodurch zum Ausdruck kommt, dass zwischen dem oder den Geräten sowie dem abnehmerseitigen Anschluss keine verlustbehafteten Wechsel- und/oder Gleichrichter angeordnet sind, sondern der Leistungsfluss zwischen dem oder den Geräten und dem Energiespeicher über Gleichstrom erfolgt.

Es ist bevorzugt, wenn die Steuerungseinrichtung zur Kommunikation mit abnehmerseitig angeschlossenen Geräten, insbesondere Gleichstromgeräte, über die abnehmerseitigem Netzwerkschnittstelle ausgebildet ist, wobei die Steuerungseinrichtung vorzugsweise als übergeordnete Steuerung zur Regelung des Leistungszu- und/oder -abflusses der Geräte ausgebildet ist. In anderen Worten soll die Steuerungseinrichtung dazu ausgebildet sein, die angeschlossenen Geräte wenigstens teilweise hinsichtlich ihres Energieverbrauchs und/oder ihrer Energieerzeugung zu steuern. Bspw. kann die Steuerungseinrichtung ein Gerät wie eine Waschmaschine, erst dann aktivieren, wenn ausreichend Energie im Energiespeicher vorgehalten wird, um den vorgesehenen Waschzyklus vollständig durchzuführen.

Wie bereits dargelegt, können die Netzwerkschnittstellen der Vorrichtung verschiedentlich ausgeführt werden. Bevorzugt ist es aber, wenn die netzseitige und/oder abnehmerseitige Netzwerkschnittstelle einen Powerline-Adapter zur Datenübertragung über den netzwerkseitigen und/oder abnehmerseitigen Anschluss umfasst. In diesem Fall erfolgt die Datenübertragung über dasselbe Kabel wie auch die Leistungsübertragung. Zusätzliche Datenleitungen können eingespart werden. Die Netzwerkschnittstellen, insbesondere die netzseitige Netzwerkschnittstelle, können auch zur Anbindung an ein Funknetz, insbesondere ein Mobilfunknetz, ausgebildet sein.

Zur Erläuterung des Verfahrens wird auf die vorstehenden Ausführungen verwiesen.

Die Erfindung wird nun anhand einer bevorzugten Ausführungsform unter Bezugnahme auf die beigefügte Zeichnung beispielhaft beschrieben. Es zeigt:

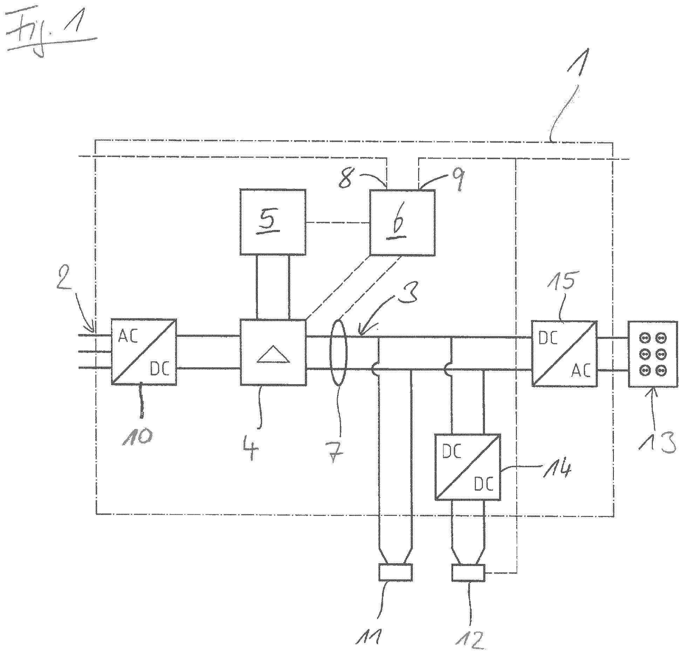

- Figur 1:: eine schematische Darstellung eines Ausführungsbeispiels einer erfindungsgemäßen Vorrichtung.

In Figur 1 ist eine erfindungsgemäße Vorrichtung 1 zur Anbindung eines Abnehmers an ein paketbasiertes Energieversorgungsnetz dargestellt.

Die Vorrichtung 1 umfasst einen netzseitigen Anschluss 2 und einen abnehmerseitigen Anschluss 3, der, wie nachfolgend noch ausführlicher erläutert, bereits innerhalb der Vorrichtung 1 auf mehrere Geräteanschlussbuchsen 11, 12, 13 aufgeteilt wird. Über eine steuerbare Stromweiche 4 ist der Energiespeicher 5 zwischen die beiden Anschlüsse 2 und 3 geschaltet. Die Stromweiche 4 ist dazu ausgebildet, die Leistungsflüsse zwischen dem netzseitigen Anschluss 2, dem abnehmerseitigen Anschluss 3 und dem Energiespeicher 5 frei zu steuern. In anderen Worten können über die Stromweiche 4 die Leistungsflüsse zwischen netzseitigen Anschluss 2 und Energiespeicher 5, Energiespeicher 5 und abnehmerseitigen Anschluss 3 sowie netzseitigen Anschluss 2 und abnehmerseitigen Anschluss 3 sowohl in Größe als auch in Richtung genau gesteuert werden, womit insbesondere eine Entkopplung der Leistungsflüsse über den netzseitigen Anschluss 2 und den abnehmerseitigen Anschluss 3 erreicht wird.

Zur Steuerung der Stromweiche 4 ist eine Steuerungseinrichtung 6 vorgesehen und mit dieser verbunden. Die Steuerungseinrichtung 6 ist darüber hinaus noch mit dem Energiespeicher 5 zur Überwachung des Ladestandes und einem Spannungsmesser 7 zur Erfassung der Spannung am abnehmerseitigen Anschluss 3 verbunden. Außerdem verfügt die Steuerungseinrichtung 6 über eine netzseitige Netzwerkschnittstelle 8 und eine abnehmerseitige Netzwerkschnittstelle 9. Über die netzwerkseitige Netzwerkschnittstelle, über die bspw. der Betreiber des Energieversorgungsnetzes an die Vorrichtung 1 angeschlossen ist, kann ausschließlich das Empfangen und evtl. Versenden von Energiepaketen aus dem bzw. in das Energieversorgungsnetz und somit der Leistungsfluss über den netzseitigen Anschluss 3 gesteuert und beeinflusst werden. Eine Steuerung oder auch nur die Abfrage von Informationen, wie der Leistungsfluss über den netzseitigen Anschluss 2 innerhalb der Vorrichtung 1 verteilt wird, insbesondere also zu welchen Anteilen er durch die Stromweiche 4 zum Energiespeicher 5 oder unmittelbar zum abnehmerseitigen Anschluss 3 geleitet wird, ist ebenso ausgeschlossen, wie das Abgreifen von Informationen über einen evtl. Leistungsfluss zwischen Energiespeicher 5 und abnehmerseitigem Anschluss 3.

Sowohl der letztgenannte Leistungsfluss als auch die Leistungsflussverteilung durch die Stromweiche 4 kann ausschließlich über die abnehmerseitige Netzwerkschnittstelle 9 überwacht und gesteuert werden. In der Folge stellt sich die Vorrichtung 1 aus Sicht des Energieversorgungsnetzes als Energiespeicher dar, von dem zwar ggf. bekannt ein mag, dass daran unmittelbar ein Abnehmer angebunden ist, über die tatsächliche Nutzung der zur Verfügung gestellten Energie durch den Abnehmer aber keine Informationen über die netzseitige Netzwerkschnittstelle abrufbar sind. Aufgrund der Ausgestaltung der Vorrichtung 1 und der Entkopplung der Leistungsflüsse über den netzseitigen Anschluss 2 und den abnehmerseitigen Anschluss 3 können über den Leistungsfluss aus dem Energieversorgungsnetz auch keinerlei entsprechende Rückschlüsse gezogen werden.

Die Stromweiche 4 wird durch die Steuerungseinrichtung 6 grundsätzlich derart gesteuert, dass an dem abnehmerseitigen Anschluss 3 eine vorgegebene Spannung, bspw. von 700 V, vorliegt. Die Ist-Spannung wird dabei über den Spannungsmesser 7 erfasst und von der Steuerungseinrichtung 6 mit einem entsprechenden Sollwert verglichen. Die Steuerungseinrichtung 6 steuert den Leistungsfluss über die Stromweiche 4 dann so, dass sich die Sollspannung einstellt. Die erforderliche Leistung kann von dem Energiespeicher 5 bezogen werden. Es ist aber auch möglich, dass - sofern grundsätzlich ein Leistungsfluss aus dem Energieversorgungsnetz über den netzseitigen Anschluss zum Energiespeicher vorliegt, d. h. ein Energiepaket empfangen wird - wenigstens ein Teil des aus dem Energieversorgungsnetz stammenden Leistungsflusses mithilfe der Stromweiche 4 unmittelbar zum abnehmerseitigen Anschluss 3 geleitet wird. Aus Sicht des Energieversorgungsnetzes ist ein entsprechender Leistungsfluss weder direkt noch über die netzseitige Netzwerkschnittstelle erkennbar, bietet jedoch den Vorteil, dass der Energiespeicher für diesen Leistungsflussanteil weder genoch entladen werden muss. Durch entsprechende Reduzierung von Teilladezyklen lässt sich die Lebensdauer des Energiespeichers, insbesondere wenn dieser als Akkumulator ausgeführt ist, in der Regel erhöhen.

Weiterhin ist die Steuerungseinrichtung 6 dazu ausgebildet, eine vorgegebene und über die abnehmerseitige Netzwerkschnittstelle veränderbare Mindestladung des Energiespeichers 5 einzuhalten. Dazu vergleicht die Steuerungseinrichtung 6 den momentanen Ladezustand des Energiespeichers 5 mit dem vorgegebenen Minimalwert und sendet über die netzseitige Schnittstelle bei Bedarf eine Anforderung für ein zusätzliches Energiepaket, um die Vorgabe einzuhalten.

Die Vorrichtung 1 gemäß Figur 1 ist zur Anbindung an ein Dreiphasen-Wechselstrom-Energieversorgungsnetz ausgebildet. Sowohl der Energiespeicher 5 als auch die übrigen Komponenten der Vorrichtung sind jedoch auf Gleichstrom ausgelegt, weswegen unmittelbar am netzseitigen Anschluss ein Gleich- und Wechselrichter 10 vorgesehen ist. Der Gleich- und Wechselrichter 10 richtet bei einem Leistungsfluss aus dem Energieversorgungsnetz den Wechselstrom in Gleichstrom. Sollte es zu einem Leistungsfluss in das Energieversorgungsnetz kommen, wird der bspw. von dem Energiespeicher 5 stammende Gleichstrom in für das Energieversorgungsnetz geeigneten Wechselstrom gewandelt.

Wie bereits angemerkt, wird bereits innerhalb der Vorrichtung der abnehmerseitige Anschluss 3 auf mehrere Geräteanschlussbuchsen 11, 12, 13 aufgeteilt.

Bei der Geräteanschlussbuchse 11 handelt es sich um eine unmittelbar mit dem abnehmerseitigen Anschluss 3 verbundene Gleichstrombuchse, an der die von der Steuerungseinrichtung 6 geregelte Spannung am abnehmerseitigen Anschluss 3 anliegt.

Die Geräteanschlussbuchse 12 ist ebenfalls eine Gleichstrombuchse, die jedoch über einen Gleichstromsteller 14 an dem abnehmerseitigen Anschluss 3 angebunden ist, sodass an der Geräteanschlussbuchse 12 eine andere Spannung anliegt als am abnehmerseitigen Anschluss 3. In die Geräteanschlussbuchse 12 ist weiterhin eine über die abnehmerseitige Netzwerkschnittstelle 9 an die Steuerungseinheit 6 angebundene Datenverbindungsbuchse integriert, sodass ein an die Geräteanschlussbuchse 12 anzuschließendes Gerät nicht nur mit dem abnehmerseitigen Anschluss 3 leistungsverbunden, sondern auch mit der Steuerungseinheit 6 datenverbunden ist. Die Steuerungseinheit 6 kann dann als übergeordnete Steuerung für das entsprechend angeschlossene Gerät dienen und bspw. die Leistungsaufnahme und/oder Leistungsabgabe des Gerätes beeinflussen.

Bei den Geräteanschlussbuchsen 13 handelt es sich um handelsübliche Steckdosen, bspw. Schuko-Steckdosen, an die elektrische Kleingeräte angeschlossen werden können. Damit entsprechende Kleingeräte, die in der Regel auf den Betrieb mit Wechselstrom ausgelegt sind, ohne Weiteres verwendet werden können, sind die Geräteanschlussbuchsen 13 über einen Wechselrichter 15 mit dem abnehmerseitigen Anschluss 3 verbunden, sodass an den Geräteanschlussbuchsen 13 eine netztypische Wechselspannung von bspw. 230V/50Hz vorliegt.

Insbesondere an die Gleichstrom-Geräteanschlussbuchse 11, 12 können auch solche Geräte angeschlossen werden, die wenigstens zeitweise elektrische Energie liefern, bspw. Fotovoltaik-Paneele oder Blockheizkraftwerke (nicht dargestellt). Die so bei der Vorrichtung 1 zur Verfügung gestellte elektrische Leistung kann entweder direkt durch andere angeschlossene Geräte verbraucht werden, oder aber über den abnehmerseitigen Anschluss und den Stromsteller 4 dem Energiespeicher 5 zugeführt werden. Vom Energiespeicher 5 kann elektrische Energie über den Stromsteller 4, den Wechselrichter 10 und den netzseitigen Anschluss 2 auch dem Energieversorgungsnetz, insbesondere in Form eines Energiepakets, zugeführt werden.

## Patentansprüche

1. Vorrichtung (1) zur Anbindung eines Abnehmers an ein paketbasiertes Energieversorgungsnetz umfassend einen netzseitigen Anschluss (2), einen abnehmerseitigen Anschluss (3) und einen Energiespeicher (5),
**dadurch gekennzeichnet, dass**
der Energiespeicher (5) derart zwischen dem netzseitigen Anschluss (2) und dem abnehmerseitigen Anschluss (3) geschaltet ist, dass die Leistungsflüsse über die beiden Anschlüsse (2, 3) voneinander entkoppelt sind, wobei der Leistungszufluss vom netzseitigen Anschluss (2) zum Energiespeicher (5) und Leistungsabfluss vom Energiespeicher (5) zum abnehmerseitigen Anschluss (3) durch eine Steuerungseinrichtung (6) steuerbar ist, die eine netzseitige Netzwerkschnittstelle (8) zur Datenanbindung an das Energieversorgungsnetz und eine abnehmerseitige Netzwerkschnittstelle (9) aufweist, wobei der Leistungsabfluss vom Energiespeicher (5) zum abnehmerseitigen Anschluss (3) ausschließlich über die abnehmerseitige Netzwerkschnittstelle (9) überwacht und gesteuert werden kann.

2. Vorrichtung nach Anspruch 1,
**dadurch gekennzeichnet, dass**
die Schaltung des Energiespeichers (5) zum steuerbaren Leistungsabfluss vom Energiespeicher (5) zum netzseitigen Anschluss (2) und/oder zum steuerbaren Leitungszufluss vom abnehmerseitigen Anschluss (3) zum Energiespeicher (5) ausgebildet ist.

3. Vorrichtung nach Anspruch 1 oder 2,
**dadurch gekennzeichnet, dass**
der Energiespeicher (5) über eine Stromweiche (4) zwischen die beiden Anschlüsse (2, 3) geschaltet ist, sodass ein steuerbarer Anteil des Leistungszuflusses vom netzseitigen Anschluss (2) unmittelbar zum abnehmerseitigen Anschluss (3) geleitet werden kann, wobei die dieser Leistungsfluss ausschließlich über die abnehmerseitige Netzwerkschnittstelle (9) überwacht und gesteuert werden kann.

4. Vorrichtung nach einem der vorhergehenden Ansprüche,
**dadurch gekennzeichnet, dass**
in der Steuerungseinrichtung (6) ein, vorzugsweise über die abnehmerseitige Netzwerkschnittstelle (9) einstellbarer Minimalwert für die in dem Energiespeicher (5) vorzuhaltende Energiemenge hinterlegt ist und die Steuerungseinrichtung (6) dazu ausgebildet ist, über die netzwerkseitige Netzwerkschnittstelle (8) Anforderungen für Energiepakete zu versenden, um den Minimalwert einzuhalten.

5. Vorrichtung nach einem der vorhergehenden Ansprüche,
**dadurch gekennzeichnet, dass**
ein Spannungsmesser (7) am abnehmerseitigen Anschluss (3) vorgesehen ist und die Steuerungseinrichtung (6) dazu ausgebildet ist, den Leistungsabfluss vom Energiespeicher (5) zum abnehmerseitigen Anschluss (3) zur Einhaltung einer Sollspannung am abnehmerseitigen Anschluss (3) zu steuern.

6. Vorrichtung nach einem der vorhergehenden Ansprüche,
**dadurch gekennzeichnet, dass**
am netzseitigen Anschluss (2) ein Gleichrichter und/oder Wechselrichter (10) zur Kopplung mit einem Wechselstromnetz vorgesehen ist, um Leistungszu- und -abflüsse zu einem als Gleichstrom-Energiespeicher ausgebildeten Energiespeicher (5) zu ermöglichen.

7. Vorrichtung nach einem der vorhergehenden Ansprüche,
**dadurch gekennzeichnet, dass**
am abnehmerseitigen Anschluss (3) ein Verteiler mit wenigstens einer Geräteanschlussbuchse (13) vorgesehen ist, wobei wenigstens ein Teil der Geräteanschlussbuchse (13) über einen Wechselrichter (15) angebunden ist.

8. Vorrichtung nach einem der vorhergehenden Ansprüche,
**dadurch gekennzeichnet, dass**
am abnehmerseitigen Anschluss wenigstens eine Geräteanschlussbuchse (11, 12) zum Anschluss von Gleichstromgeräten, vorzugsweise einer Wärmepumpe, eines Kraft-Wärme-Kopplungssystems, eines Fotovoltaik-Systems, eines thermischen Speichers oder eines zusätzlichen elektrischen Speichers, vorgesehen ist.

9. Vorrichtung nach einem der vorhergehenden Ansprüche,
**dadurch gekennzeichnet, dass**
die Steuerungseinrichtung (6) zur Kommunikation mit abnehmerseitig angeschlossenen Geräten, insbesondere Gleichstromgeräten, über die abnehmerseitige Netzwerkschnittstelle (9) ausgebildet ist, wobei die Steuerungseinrichtung (6) vorzugsweise als übergeordnete Steuerung zur Regelung des Leistungszu- und/oder -abflusses der Geräte ausgebildet ist.

10. Vorrichtung nach einem der vorhergehenden Ansprüche,
**dadurch gekennzeichnet, dass**
die netzseitige und/oder abnehmerseitige Netzwerkschnittstelle (8, 9) einen Powerline-Adapter zur Datenübertragung über den netzwerkseitigen und/oder abnehmerseitigen Anschluss (2, 3) umfasst.

11. Verfahren zum Betrieb einer Vorrichtung gemäß einem der vorhergehenden Ansprüche, wobei der Leistungsfluss über den netzseitigen Anschluss (2) über die netzseitige Netzwerkschnittstelle (9) überwacht und beeinflusst wird, der Leistungsfluss über den abnehmerseitigen Anschluss (3) aber ausschließlich über die abnehmerseitige Netzwerkschnittstelle (9) überwacht und gesteuert wird.

## Claims

1. Device (1) for connecting a consumer to a packet-based power supply network comprising a network-side connection (2), a consumer-side connection (3) and an energy store (5),
**characterized in that**
the energy store (5) is connected between the network-side connection (2) and the consumer-side connection (3) in such a way that the power flows via the two connections (2, 3) are decoupled from one another, wherein the power inflow from the network-side connection (2) to the energy store (5) and power outflow from the energy store (5) to the consumer-side connection (3) can be controlled by a control device (6) which has a network-side network interface (8) for data connection to the power supply network and a consumer-side network interface (9), wherein the power outflow from the energy store (5) to the consumer-side connection (3) can be monitored and controlled exclusively via the consumer-side network interface (9).

2. Device according to claim 1,
**characterized in that**
the circuit of the energy store (5) is designed for controllable power outflow from the energy store (5) to the network-side connection (2) and/or for controllable power inflow from the consumer-side connection (3) to the energy store (5).

3. Device according to claim 1 or 2,
**characterized in that**
the energy store (5) is connected between the two connections (2, 3) via a current switch (4), so that a controllable proportion of the power inflow from the network-side connection (2) can be routed directly to the consumer-side connection (3), it being possible to monitor and control this power flow exclusively via the consumer-side network interface (9).

4. Device according to any one of the preceding claims,
**characterized in that**
a minimum value, which can be set preferably via the consumer-side network interface (9), for the amount of energy to be held in reserve in the energy store (5) is stored in the control device (6), and the control device (6) is designed to send requests for energy packets via the network-side network interface (8) in order to maintain the minimum value.

5. Device according to any one of the preceding claims,
**characterized in that**
a voltmeter (7) is provided at the consumer-side connection (3) and the control device (6) is designed to control the power outflow from the energy store (5) to the consumer-side connection (3) in order to maintain a setpoint voltage at the consumer-side connection (3).

6. Device according to any one of the preceding claims,
**characterized in that**
a rectifier and/or inverter (10) is provided at the network-side connection (2) for coupling with an AC network in order to enable power inflows and outflows to an energy store (5) designed as a DC energy store.

7. Device according to any one of the preceding claims,
**characterized in that**
a distributor with at least one device connection socket (13) is provided at the consumer-side connection (3), at least part of the device connection socket (13) being connected via an inverter (15).

8. Device according to any one of the preceding claims,
**characterized in that**
at least one device connection socket (11, 12) for connecting DC devices, preferably a heat pump, a combined heat and power system, a photovoltaic system, a thermal accumulator or an additional electrical accumulator, is provided at the consumer-side connection.

9. Device according to any one of the preceding claims,
**characterized in that**
the control device (6) is designed for communication with devices connected on the consumer side, in particular DC devices, via the consumer-side network interface (9), the control device (6) preferably being designed as a higher-level controller for regulating the power inflow and/or outflow of the devices.

10. Device according to any one of the preceding claims,
**characterized in that**
the network-side and/or consumer-side network interface (8, 9) comprises a powerline adapter for data transmission via the network-side and/or consumer-side connection (2, 3).

11. Method for operating a device according to any one of the preceding claims, wherein the power flow via the network-side connection (2) is monitored and influenced via the network-side network interface (9), but the power flow via the consumer-side connection (3) is monitored and controlled exclusively via the consumer-side network interface (9).

## Revendications

1. Dispositif (1) pour le raccordement d'un consommateur à un réseau d'alimentation en énergie basé sur des paquets, comprenant un raccordement (2) côté réseau, un raccordement (3) côté consommateur et un accumulateur d'énergie (5),
**caractérisé en ce que**
l'accumulateur d'énergie (5) est monté entre le raccordement (2) côté réseau et le raccordement (3) côté consommateur de telle sorte que les flux de puissance sont découplés les uns des autres via les deux raccordements (2, 3), l'afflux de puissance du raccordement côté réseau (2) à l'accumulateur d'énergie (5) et la sortie de puissance de l'accumulateur d'énergie (5) au raccordement côté consommateur (3) pouvant être commandées par un dispositif de commande (6) qui présente une interface de réseau côté réseau (8) pour la connexion de données au réseau d'alimentation en énergie et une interface de réseau côté consommateur (9), la sortie de puissance de l'accumulateur d'énergie (5) au raccordement côté consommateur (3) pouvant être surveillée et commandée exclusivement par l'interface de réseau côté consommateur (9).

2. Dispositif selon la revendication 1,
**caractérisé en ce que**
le circuit de l'accumulateur d'énergie (5) est conçu pour la sortie de puissance contrôlable de l'accumulateur d'énergie (5) vers le raccordement (2) côté réseau et/ou pour l'afflux de puissance contrôlable du raccordement (3) côté consommateur vers l'accumulateur d'énergie (5).

3. Dispositif selon la revendication 1 ou 2,
**caractérisé en ce que**
l'accumulateur d'énergie (5) est connecté entre les deux raccordements (2, 3) par l'intermédiaire d'un aiguillage de courant (4), de sorte qu'une partie contrôlable de l'afflux de puissance peut être dirigée directement du raccordement côté réseau (2) vers le raccordement côté consommateur (3), ce flux de puissance pouvant être surveillé et commandé exclusivement par l'intermédiaire de l'interface de réseau côté consommateur (9).

4. Dispositif selon l'une quelconque des revendications précédentes,
**caractérisé en ce que**
dans le dispositif de commande (6) est enregistrée une valeur minimale, de préférence réglable par l'intermédiaire de l'interface de réseau (9) côté consommateur, pour la quantité d'énergie à conserver dans l'accumulateur d'énergie (5), et le dispositif de commande (6) est conçu pour envoyer des demandes de paquets d'énergie par l'intermédiaire de l'interface de réseau (8) côté réseau, afin de respecter la valeur minimale.

5. Dispositif selon l'une quelconque des revendications précédentes,
**caractérisé en ce qu'**
un voltmètre (7) est prévu sur le raccordement (3) côté consommateur et **en ce que** le dispositif de commande (6) est conçu pour commander la sortie de puissance de l'accumulateur d'énergie (5) vers le raccordement (3) côté consommateur afin de maintenir une tension de consigne sur le raccordement (3) côté consommateur.

6. Dispositif selon l'une quelconque des revendications précédentes,
**caractérisé en ce qu'**
un redresseur et/ou un onduleur (10) est prévu sur le raccordement (2) côté réseau pour le couplage avec un réseau de courant alternatif, afin de permettre des affluxes et des sorties de puissance vers un accumulateur d'énergie (5) conçu comme un accumulateur d'énergie à courant continu.

7. Dispositif selon l'une quelconque des revendications précédentes,
**caractérisé en ce qu'**
un répartiteur avec au moins une prise de raccordement d'appareil (13) est prévu sur le raccordement (3) côté consommateur, au moins une partie de la prise de raccordement d'appareil (13) étant raccordée par un onduleur (15).

8. Dispositif selon l'une quelconque des revendications précédentes,
**caractérisé en ce qu'**
au moins une prise de raccordement d'appareil (11, 12) est prévue sur le raccordement côté consommateur pour le raccordement d'appareils à courant continu, de préférence une pompe à chaleur, un système de couplage chaleur-force, un système photovoltaïque, un accumulateur thermique ou un accumulateur électrique supplémentaire.

9. Dispositif selon l'une quelconque des revendications précédentes,
**caractérisé en ce que**
le dispositif de commande (6) est conçu pour communiquer avec des appareils raccordés côté consommateur, notamment des appareils à courant continu, par l'intermédiaire de l'interface de réseau (9) côté consommateur, le dispositif de commande (6) étant de préférence conçu comme une commande supérieure pour la régulation de l'afflux et/ou de la sortie de puissance des appareils.

10. Dispositif selon l'une quelconque des revendications précédentes,
**caractérisé en ce que**
l'interface de réseau (8, 9) côté réseau et/ou côté consommateur comprend un adaptateur CPL pour la transmission de données via le raccordement (2, 3) côté réseau et/ou côté consommateur.

11. Procédé de fonctionnement d'un dispositif selon l'une quelconque des revendications précédentes, dans lequel le flux de puissance via le raccordement côté réseau (2) est surveillé et influencé par l'interface de réseau côté réseau (9), mais le flux de puissance via le raccordement côté consommateur (3) est surveillé et commandé exclusivement par l'interface de réseau côté consommateur (9).
